# EUROPEAN PATENT APPLICATION

(11) **EP 3 486 196 A1**
(43) Date of publication of application: **22.05.2019**
(21) Application number: 17830327.7
(22) Date of filing: 21.06.2017
(51) Int. Cl.: B65D 88/74, B65D 90/00, B65D 85/34, F25B 1/00, F24F 6/14

(54) **CONTAINER FOR DRY FOG HUMIDITY CONTROL AND FRESHNESS PRESERVATION OF FRUITS AND VEGETABLES**

(30) Priority: 18.07.2016 CN 201610564737
(71) Applicant: Jin, Wenyuan, Suzhou, Jiangsu 215111 (CN)
(72) Inventor: JIN, Hengji, Suzhou Jiangsu 215111 (CN); JIN, Wenyuan, Suzhou Jiangsu 215111 (CN)
(74) Representative: Keil & Schaafhausen Patent- und Rechtsanwälte PartGmbB
(86) International application number: PCT/CN2017/089275
(87) International publication number: WO 2018/014693

(57) **Abstract**

Disclosed is a container for the dry fog humidity control and freshness preservation of fruits and vegetables, comprising a container body (1) and a refrigeration unit, wherein the refrigeration unit comprises a compressor, an evaporator (2) and a condenser, the evaporator (2) being located inside the container body (1); and further comprising a water tank (3) for collecting condensed water of the refrigeration unit, wherein a dry fog atomization spray head (8) is disposed adjacent to the evaporator (2) in the container body (1); the dry fog atomization spray head (8) comprises a gas cavity (8-4), a liquid cavity (8-2), a mixing cavity (8-5) and a nozzle (8-6); a liquid inlet (8-1) of the liquid cavity (8-2) is in communication with the water tank (3); and the nozzle (8-6) of the dry fog atomization spray head (8) faces the evaporator (2) so as to enable dry fog generated by the dry fog atomization spray head (8) to be discharged along with cold air of the refrigeration unit. The container is capable of maintaining the moisture and the weight of fruits and vegetables for a long time in a transportation process, thereby guaranteeing the freshness of fruits and vegetables during refrigerated transport, is applicable to the humidity and freshness preservation of fruits and vegetables during transport over sea and land, and is especially applicable to marine transport where fresh water is lacking, etc.

## Description

### BACKGROUND

### 1. Technical Field

The present disclosure relates to a container for the dry fog humidity control and freshness preservation of fruits and vegetable, which belongs to the technical field of container and transport.

### 2. Description of Related Art

Refrigerated containers refer to storage containers which are specially designed to have certain heat isolation and maintain a certain low temperature, and are applicable to the refrigeration transport of all types of food and capable of withstanding harsh transport conditions. When changing vehicles for transporting refrigerated containers, food does not need to be reloaded, so that loading and unloading of the entire transit time is significantly shortened, transportation costs are reduced, and the temperature in the container can be adjusted within a certain range to adapt to refrigerated transport requirements for all kinds of perishable food, thus avoiding the effect of temperature fluctuations on food quality. Consequently, more and more applications of refrigerated containers are employed in the marine transportation of fruits and vegetables.

However, the refrigeration system in the refrigerated container will remove the moisture in air in the container, and the drying air would make moisture in fruits and vegetables evaporate (which will result in fruits and vegetables weight loss, and loss of economic value); while moisture retention in fruits and vegetables is the most important factor to maintain freshness and the quality of nutritional value of fruits and vegetables, so the ambient humidity of the fruit and vegetable storage in transportation process generally needs to be maintained above 80%, even 95% or more, in order to control water loss. Conventionally, ultrasonic atomization humidifying or moisturizing wrap packaging is mainly used to humidify fruits and vegetables in the refrigerated container. But the disadvantage of ultrasonic atomization humidifying is that when spraying a large amount of moisture to the storage environment, it is unavoidable to introduce hot air. Hot air is easy to cause fog condensation under low temperature and fog condensation to the surface of fruits and vegetables would lead to breeding of pathogenic bacteria. Besides, the operation of using plastic wrap to pack fruits and vegetables one by one or retaining moisture in fruits and vegetables is complicated and will have to pay relatively high labor costs, the poor wrap permeability would cause negative effect on fruits and vegetables, and a large number of plastic packaging materials will result in environmental issues and cause damage to the environment.

### SUMMARY

The technical problem to be solved by the present invention is: to overcome the disadvantages of the techniques described above, the lack of fresh water for long periods of transport by the marine transport and other circumstances, and to provide a long-term moisture and weight of fruits and vegetables in order to ensure the freshness of fruits and vegetables in refrigerated containers in transport process.

To solve the above technical problem, the technical solution proposed by the invention is: a container for the dry fog humidity control and freshness preservation of fruits and vegetables, comprising a container body and a refrigeration unit, wherein the refrigeration unit comprises a compressor, an evaporator and a condenser, the evaporator being located inside the container body; and further comprising a water tank for collecting condensed water of the refrigeration unit, wherein a dry fog atomization spray head is disposed adjacent to the evaporator in the container body; the dry fog atomization spay head comprises a gas cavity, a liquid cavity, a mixing cavity and a nozzle; a liquid inlet of the liquid cavity is in communication with the water tank; and the nozzle of the dry fog atomization spray head faces the evaporator so as to enable dry fog generated by the dry fog atomization spray head to be discharged along with cold air of the refrigeration unit.

In the present invention, the dry fog atomization spray head generating dry fog through compressed air (typically connected to an air compressor) and comprising a gas cavity, a liquid cavity, a mixing cavity and a nozzle are prior art, which is not repeated.

When using the present invention, the condensed water in the refrigeration unit of the container is collected through the water tank, the condensed water is used to supply water to the dry fog atomization spray head, so that the dry fog atomization spray head can spray dry fog to maintain fruits and vegetables in the container in a desired high humidity, thereby overcoming lack of freshwater resources in the duration of marine transport. In addition, the dry fog nozzle is arranged to face the evaporator so as to enable cold air generated by the refrigeration unit to spread dry fog to the entire container quickly.

The dry fog refers to fog droplet which does not exceed 10µm in size, and the droplet size is generally 2-10µm and can be quickly and uniformly diffused, so that the fog droplet will be evaporated into the air before reaching the ground, and even the humidity is up to 98%, fruits and vegetables will not be wet and the container will be in a "dry" state, enabling water not to be stagnant on fruits and vegetables and the surface of the packages. Thus, the water can be prevented due to high humidity, dripping phenomenon, and the surface of fruits and vegetables is still dry and not perishable. Further, high-humidity prevents air in the container from absorbing moisture of fruits and vegetables so as to guarantee the quality and fresh weight of fruits and vegetables and retain moisture in fruits and vegetables, thereby ensuring the freshness of frozen fruits and vegetables. The container is capable of maintaining the moisture and the weight of fruits and vegetables for a long time in a transportation process, thereby guaranteeing the freshness of fruits and vegetables during refrigerated transport, is applicable to the humidity and freshness preservation of fruits and vegetables during transport over sea and land, and is especially applicable to marine transport where fresh water is lacking, etc.

In order to further improve the preservation effect of the container, the technical solution further comprises a negative ion generating apparatus, wherein the negative ion generating apparatus comprises a DC negative high-voltage generator and a negative ion releasing tip, and the negative ion releasing tip is disposed in the gas cavity and adjacent to the mixing cavity. Negative ions possess high activity, so that negative oxygen ions may be utilized to reduce the activity of metabolic enzymes in fruits and vegetables and reduce the content of oxygen in the air, thereby reducing the fruit and vegetable respiratory intensity and avoiding the accumulation of ripening agent ethylene, ethanol, etc. in fruits and vegetables, thus extending the shelf life of fruits and vegetables.

In the present invention, the negative ion releasing tip is disposed in the gas cavity and adjacent to the mixing cavity, and the gas cavity is typically coupled to an air compressor, so that a higher pressure is generated and the air humidity is high. When the air pressure increases, the air density increases, and the number of electron collisions increases to increase the ionization probability, so it is easier to produce negative ions. If the humidity is higher, the probability of electrons being absorbed by water molecules to form negative oxygen ions becomes higher under the action of water molecules, thereby ensuring that the negative ion releasing tip releases negative ions fully. Further, because the negative ion releasing tip is disposed in the gas cavity and adjacent to the mixing cavity, the high pressure gas at the nozzle may be utilized to diffuse negative ions at a great speed, and after negative ions are sprayed by the nozzle, cold air generated by the refrigeration unit is further utilized to speed up the diffusion of negative ions, which increases the fruits and vegetables fresh-keeping effect.

In the present invention, a humidity sensor is disposed in the container body. The humidity sensor can be connected with a controller, and the humidity in the container can be automatically and precisely controlled and adjusted, so that the container always has uniform moisture, to ensure the fruits and vegetables fresh-keeping effect.

In the present invention, a filter device is disposed at a water inlet of the water tank. The filter device is to filter out impurities in the condensed water, thereby preventing the dry fog atomization spray head from clogging.

In the present invention, an overflow pipe is disposed on the water tank.

In the present invention, the container body is divided into a first container body and a second container body by a partition, the evaporator and the dry fog atomization spray head are disposed in the first container body, the evaporator is slantwise arranged from top to bottom, a water collecting sump is disposed at the bottom of the first container body and in communication with the water tank, an air supply guiding plate is provided on the first container body, and cold air generated by the refrigeration unit enters the second container body through the air supply guiding plate. The second container body is used to store fruits and vegetables, the evaporator and the second container body are separated by the partition, and the air supply guiding plate is used to introduce cold air into the second container body to enable cold air to be distributed evenly.

### BRIEF DESCRIPTION OF THE DRAWINGS

The accompanying drawings are included to provide a further understanding of the present disclosure, and are incorporated in and constitute a part of this specification. The drawings illustrate exemplary embodiments of the present disclosure and, together with the description, serve to explain the principles of the present disclosure.
FIG. 1 is a schematic diagram illustrating the structure according to an exemplary embodiment of the present disclosure.
FIG. 2 is a schematic diagram illustrating the structure of the dry fog atomization spray head according to an exemplary embodiment of the present disclosure.
FIG. 3 is a schematic diagram illustrating the structure of the dry fog atomization spray head according to another exemplary embodiment of the present disclosure.

### DESCRIPTION OF THE EXEMPLARY EMBODIMENTS

### Embodiment 1

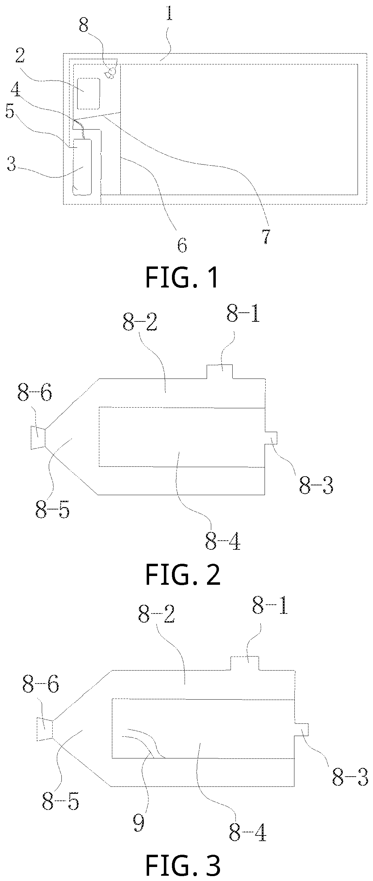

As shown in FIGS. 1 and 2, a container for the dry fog humidity control and freshness preservation of fruits and vegetables according to an exemplary embodiment of the present disclosure comprises a container body 1 and a refrigeration unit, wherein the refrigeration unit comprises a compressor, an evaporator 2 and a condenser (the compressor and the condenser are not shown in the figures). The evaporator 2 is located inside the container body 1, and cold air is blown into the container body through an air blower. The condensed water of the refrigeration unit is collected by a water tank 3.

A dry fog atomization spray head 8 is disposed adjacent to the evaporator 2 in the container body 1, and comprises a gas cavity 8-4, a liquid cavity 8-2, a mixing cavity 8-5 and a nozzle 8-6. A liquid inlet 8-1 of the liquid cavity 8-2 is in communication with the water tank 3 through a first conduit 5, and a water pump is provided in the water tank 3 and used to supply water to the dry fog atomization spray head 8. A gas inlet 8-3 of the gas cavity 8-4 is connected with an air compressor. The nozzle 8-6 of the dry fog atomization spray head 8 faces the evaporator 2 so as to enable dry fog generated by the dry fog atomization spray head 8 to be discharged along with cold air of the refrigeration unit and diffused to the entire container body 1 quickly.

The present embodiment may also make the following improvements.
1) A humidity sensor is disposed in the container body 1. The humidity sensor can be connected with a controller, and the humidity in the container can be automatically and precisely controlled and adjusted, so that the container always has uniform moisture, to ensure the fruits and vegetables fresh-keeping effect.
2) A filter device is disposed at a water inlet of the water tank 3. The filter device is used to filter out impurities in the condensed water, thereby preventing the dry fog atomization spray head from clogging.
3) An overflow pipe is disposed on the water tank 3.
4) The container body 1 is divided into a first container body and a second container body by a partition 6, the evaporator 2 and the dry fog atomization spray head 8 are disposed in the first container body, the evaporator 2 is slantwise arranged from top to bottom, a water collecting sump 7 is disposed at the bottom of the first container body and in communication with the water tank 3 through a second conduit 4, an air supply guiding plate (not shown in the figures) is provided on the first container body, and cold air generated by the refrigeration unit enters the second container body through the air supply guiding plate.

### Embodiment 2

Embodiment 2 is an improvement over embodiment 1, and the difference is, as shown in FIG. 3, a negative ion generating apparatus. The negative ion generating apparatus comprises a DC negative high-voltage generator (not shown in the figures) and a negative ion releasing tip 9, and the negative ion releasing tip 9 is disposed in the gas cavity 8-4 and adjacent to the mixing cavity 8-5.

The above-mentioned descriptions represent merely an exemplary embodiment of the present disclosure, without any intention to limit the scope of the present disclosure thereto. Various equivalent changes, alterations or modifications based on the claims of the present disclosure are all consequently viewed as being embraced by the scope of the present disclosure.

## Claims

1. A container for the dry fog humidity control and freshness preservation of fruits and vegetables, comprising a container body and a refrigeration unit,
wherein the refrigeration unit comprises a compressor, an evaporator and a condenser, the evaporator being located inside the container body;
wherein the container further comprises a water tank for collecting condensed water of the refrigeration unit;
wherein a dry fog atomization spray head is disposed adjacent to the evaporator in the container body;
wherein the dry fog atomization spay head comprises a gas cavity, a liquid cavity, a mixing cavity and a nozzle;
wherein a liquid inlet of the liquid cavity is in communication with the water tank; and
wherein the nozzle of the dry fog atomization spray head faces the evaporator so as to enable dry fog generated by the dry fog atomization spray head to be discharged along with cold air of the refrigeration unit.

2. The container for the dry fog humidity control and freshness preservation of fruits and vegetables according to claim 1, further comprising a negative ion generating apparatus, wherein the negative ion generating apparatus comprises a DC negative high-voltage generator and a negative ion releasing tip, and the negative ion releasing tip is disposed in the gas cavity and adjacent to the mixing cavity.

3. The container for the dry fog humidity control and freshness preservation of fruits and vegetables according to claim 1, wherein a humidity sensor is disposed in the container body.

4. The container for the dry fog humidity control and freshness preservation of fruits and vegetables according to claim 1, wherein a filter device is disposed at a water inlet of the water tank.

5. The container for the dry fog humidity control and freshness preservation of fruits and vegetables according to claim 1, wherein an overflow pipe is disposed on the water tank.

6. The container for the dry fog humidity control and freshness preservation of fruits and vegetables according to any of claims 1-5,
wherein the container body is divided into a first container body and a second container body by a partition,
wherein the evaporator and the dry fog atomization spray head are disposed in the first container body,
wherein the evaporator is slantwise arranged from top to bottom, a water collecting sump is disposed at the bottom of the first container body and in communication with the water tank, an air supply guiding plate is provided on the first container body, and
wherein cold air generated by the refrigeration unit enters the second container body through the air supply guiding plate.
